(19) Europäisches Patentamt
European Patent Office
Office européen des brevets

(11) Veröffentlichungsnummer : **0 058 313**
**B1**

(12) # EUROPÄISCHE PATENTSCHRIFT

(45) Veröffentlichungstag der Patentschrift : **02.05.84**

(21) Anmeldenummer : **82100458.7**

(22) Anmeldetag : **23.01.82**

(51) Int. Cl.³ : **C 08 F 2/24**, C 08 F257/02, D 21 H 3/38 // (C08F257/02, 220/02)

(54) **Kationisches Leimungsmittel für Papier und Verfahren zu seiner Herstellung.**

(30) Priorität : **05.02.81 DE 3103917**

(43) Veröffentlichungstag der Anmeldung : **25.08.82 Patentblatt 82/34**

(45) Bekanntmachung des Hinweises auf die Patenterteilung : **02.05.84 Patentblatt 84/18**

(84) Benannte Vertragsstaaten : **CH DE FR GB IT LI NL**

(56) Entgegenhaltungen :
**EP-A- 0 033 064**
**DE-A- 1 546 236**
**DE-A- 2 814 527**

(73) Patentinhaber : **BAYER AG**
**Konzernverwaltung RP Patentabteilung**
**D-5090 Leverkusen 1 Bayerwerk (DE)**

(72) Erfinder : **Probst, Joachim, Dr.**
**Haferkamp 3**
**D-5000 Koeln 80 (DE)**
Erfinder : **Kolb, Günter, Dr.**
**Heinrich-von-Kleist-Strasse 7**
**D-5090 Leverkusen 1 (DE)**
Erfinder : **Mummenhoff, Peter, Dr.**
**Silesiusstrasse 76**
**D-5000 Koeln 80 (DE)**
Erfinder : **Bäumgen, Heinz**
**Buchenweg 10**
**D-5090 Leverkusen 1 (DE)**

**EP 0 058 313 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Kationisches Leimungsmittel für Papier und Verfahren zu seiner Herstellung

Die vorliegende Erfindung betrifft wäßrige, kolloiddisperse Papierleimungsmittel auf der Basis von Copolymerisaten aus Acrylnitril oder Methacrylnitril und Acrylsäure- oder Methacrylsäureestern, die in Gegenwart von chemisch einheitlich aufgebauten, quaternierten Terpolymeren aus N,N-Dimethylaminoethyl-(meth)acrylat, Styrol und Acrylnitril als Emulgatoren polymerisiert worden sind.

Es ist bekannt (vgl. DE-OS 1 621 688), kationische Papierleimungsmittel dadurch herzustellen, daß man die wäßrige Lösung eines in Salzform vorliegenden Polykations auf der Basis von Maleinsäureanhydrid und anderen Comonomeren mit einem wäßrigen Emulsionshomopolymerisat oder -copolymerisat mischt. Die so hergestellten Mischungen sind jedoch im allgemeinen instabil und neigen zu Sedimentabscheidungen, die bei der Papierherstellung störend wirken, denn unter anderem kann hierbei eine inhomogene Leimung des Papiers resultieren.

In der DE-OS 2 814 527 wird die Darstellung eines Leimungsmittels für Papier beschrieben, das in Gegenwart eines mit Epihalogenhydrin quaternierten polymeren kationischen Emulgators aus N,N-Dimethylaminoalkyl(meth)acrylat und substitutiertem bzw. unsubstituiertem Styrol, gegebenenfalls unter Zusatz eines Hilfsemulgators der Formel

$$R—O—(CH_2—CH_2—O)_nSO_3^{\ominus}M^{\oplus} \qquad (I)$$

worin

R einen höheren aliphatischen oder cycloaliphatischen Kohlenwasserstoffrest,
$M^{\oplus}$ ein einwertiges Metallkation oder Ammonium und
n eine ganze Zahl $\geq 2$ bedeuten,

hergestellt worden ist. In Gegenwart dieser polymeren Emulgatoren werden hydrophobe Monomere, wie Styrol, Styrolderivate, Acrylsäureester und/oder Methacrylsäureester in wäßrigem Medium polymerisiert. In einer bevorzugten Ausführungsform wird eine Mischung von 23,5 Gew.-% Dimethylaminoethylmethacrylat und 76,5 Gew.-% Styrol in Isopropanol polymerisiert. Anschließend wird mit Essigsäure angesäuert, in Wasser gelöst und danach mit Epichlorhydrin bei einer Temperatur von 80 bis 85 °C quaterniert. Das so hergestellte emulgierfähige Polykation wird danach zur wäßrigen Emulsionspolymerisation eines Gemischs von Styrol und 2-Ethylhexylacrylat (Gewichtsverhältnis 3 : 1) eingesetzt, wobei das Gewichtsverhältnis des Emulgators zum Monomergemisch 1 : 2 beträgt. Als anionisches Hilfsdispergiermittel kommt eine Verbindung (1) mit $M = NH_4$ zum Einsatz und als Initiator wäßriges Wasserstoffperoxid. Die so erhaltenen Polymerisate stellen optisch trübe, aber dennoch relativ stabile Dispersionen dar. Wenn man jedoch den Gehalt an basischen Monomeren in der polymeren kationischen Emulgatorkomponente auf 20 Gew.-% und darunter absenken will, werden die Dispersionen sehr schnell grobteiliger, instabiler und neigen zu Polymerausfall. Die auftretenden Polymerabscheidungen führen meist zu einer erheblichen Verschlechterung des Leimungseffektes sowie zu Störungen im Arbeitsablauf bei der Papierproduktion.

Es wurde nun gefunden, daß stabile kolloiddisperse, meist durchscheinende Lösungen erhalten werden, wenn man Acrylnitril oder Methacrylnitril mit Acrylsäure- oder Methacrylsäureestern in Gegenwart von speziellen polymeren kationischen Emulgatoren im wäßrigen System polymerisiert. Diese Emulgatoren sind Quaternierungsprodukte von chemisch sehr einheitlich aufgebauten Terpolymeren aus N,N-Dimethylaminoethyl (meth)-acrylat, Styrol und Acrylnitril mit Gehalten an basischem Comonomer von höchstens 40 Gew.-%.

Das Papierleimungsmittel gemäß der Erfindung als kolloiddisperse Lösung mit mittleren Teilchendurchmessern von 15 bis 200 µm wird erhalten, indem man in einem wäßrigen Medium eine wasserlösliche kationische, chemisch einheitlich aufgebaute Terpolymerverbindung aus

a) 7-40, vorzugsweise 8-20 Gew.-%, N,N-Dimethylaminoethylacrylat und/oder -methacrylat,
b) 45-80 Gew.-% Styrol und
c) 4-40, vorzugsweise 5-35 Gew.-% Acrylnitril

auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-%, bezogen auf das folgende Monomergemisch, dieses Emulgators d) Acrylnitril bzw. Methacrylnitril in Mengen von 5 bis 95, vorzugsweise 10-90 Gew.-% mit e) Acrylsäure- und/oder Methacrylsäure-$C_1$-$C_{12}$-alkylestern in Mengen von 5 bis 95 vorzugsweise 10 bis 90 Gew.-%, wobei die Summe der Komponenten d) und e) 100 Gew.-% beträgt, emulgiert und die so erhaltene Emulsion einer radikalisch initiierten Emulsionspolymerisation bei Temperaturen von 20 bis 150 °C unterwirft.

Vorzugsweise beträgt das Gewichtsverhältnis zwischen polymerem, kationischem Emulgator und Monomergemisch aus d) und e) 1 : 4 bis 1 : 1.

Das Papierleimungsmittel gemäß der Erfindung wird auch erhalten, wenn man neben dem genannten

kationischen Emulgator einen kationischen und/oder nichtionogenen Hilfsemulgator in Mengen von 1 bis 40 Gew.-%, vorzugsweise 3 bis 20 Gew.-%, bezogen auf den vorstehenden kationischen Emulgator einsetzt, wobei der nichtionogene Emulgator die Formel

$$R_1-X-(CH_2-CH_2-O)_n-H \qquad (II)$$

besitzt, worin

X O, NH oder COO bedeutet,
$R_1$ ein höherer aliphatischer, cycloaliphatischer, araliphatischer oder aromatischer Kohlenwasserstoffrest mit 6-30 C-Atomen ist, und
n eine ganze Zahl $\geqslant 2$ ist

und wobei der kationische Hilfsemulgator die Formel

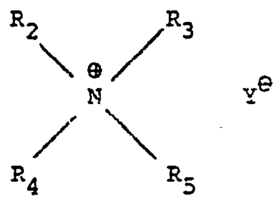

(III)

besitzt, wobei
$R_2$ und $R_3$ höhere aliphatische bzw. araliphatische Kohlenwasserstoffreste mit 6 bis 20 C-Atomen,
$R_4$ und $R_5$ niedere aliphatische Kohlenwasserstoffreste mit 1 bis 6 C-Atomen und
$Y^{\ominus}$ ein Halogenidion darstellen.

Das chemisch sehr einheitlich aufgebaute Terpolymere aus N,N-Dimethylaminoethyl (meth)acrylat, Styrol und Acrylnitril wird im organischen Medium vor der Zugabe von Säuren quaterniert, wobei Epihalogenhydrine als Reaktivquaternierungsmittel bevorzugt sind. Anschließend erfolgt die Säurezugabe und die Auflösung zu wäßrigen Lösungen mit einer Konzentration von 10 bis 30 Gew.-%, vorzugsweise 15 bis 25 Gew.-%. Die so erhaltenen Emulgatorlösungen können nun noch destillativ von organischem Lösungsmittel befreit werden; die Entfernung des organischen Lösungsmittels ist jedoch nicht notwendig, da das Lösungsmittel im weiteren Reaktionsverlauf der Emulsionspolymerisation im allgemeinen nicht stört.

Für die Emulgierung reicht es aus, wenn man die quaternierten kationischen Terpolymeren ohne weitere Zusätze für die Emulsionspolymerisation einsetzt. In manchen Fällen erweist es sich jedoch als recht günstig, wenn man zusammen mit dem polymeren kationischen Emulgator oligomere nichtionogene und/oder niedermolekulare kationische Hilfsemulgatoren in Mengenverhältnissen von 1 bis 40 Gew.-%, vorzugsweise 3 bis 20 Gew.-%, bezogen auf den kationischen Emulgator einsetzt.

Als nichtionogene Hilfsemulgatoren eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z. B. Ethylenoxid.

Beispiele dafür sind Umsetzungsprodukte von Ethylenoxid mit Carbonsäuren wie z. B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z. B. substituierten Benzyl-, Phenylphenolen, Nonylphenol und mit längerkettigen Aminen wie z. B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Als kationische, niedermolekulare Hilfsemulgatoren sind quaternierte Ammoniumsalze, wie z. B. Benzyldodecyl-dimethyl-ammoniumchlorid, geeignet. Die genannten Hilfsemulgatoren bewirken eine zusätzliche Emulgierung des Monomergemischs und in manchen Fällen eine Stabilitätssteigerung der kolloiddispersen Leimungsmittel. Ein Einsatz mit zu hohen Mengen an diesen Hilfsdispergatoren ist jedoch nicht anzuraten, da dann leicht unerwünschtes Schäumen auftreten kann.

Als Acrylsäure- bzw. Methacrylsäureester, die bei der radikalischen Emulsionscopolymerisation mit Acrylnitril oder Methacrylnitril eingesetzt werden, sind vorzugsweise solche Verbindungen geeignet, die mit Acrylnitril oder Methacrylnitril Copolymerisate mit Filmbildungstemperaturen unterhalb von 100 °C bilden.

Copolymere, die aufgrund der Lage ihres Glaspunktes höhere Filmbildungstemperaturen aufweisen, besitzen nur eine unzureichende Leimungswirkung. Prinzipiell geeignet sind Acrylate wie Methyl-, Ethyl-, n-Butyl- und 2-Ethylhexylacrylat sowie Methacrylate wie Methylmethacrylat und n-Butylmethacrylat. Sie können einzeln oder in Mischungen mit Acrylnitril oder Methacrylnitril copolymerisiert werden. Der Gehalt an Acrylnitril bzw. Methacrylnitril liegt erfindungsgemäß zwischen 5 und 95 Gew.-%, vorzugsweise 10 und 90 Gew.-%, liegen. Einstellungen mit zu wenig (Meth)-acrylnitril im Copolymerisat können aufgrund ihrer Klebrigkeit bei der Papierherstellung stören; bei Einstellungen mit sehr viel (Meth)

acrylnitril ist die Leimung des Papiers ungenügend.

Als Initiatoren für die Emulsionspolymerisation kommen bevorzugt wasserlösliche, Radikale liefernde nichtionogene Peroxide wie Wasserstoffperoxid und t-Butylhydroperoxid sowie wasserlösliche Azoverbindungen, wie sie z. B. in der DE-OS 2 841 045 beschrieben sind, in Betracht. Weiterhin sind Redoxsysteme geeignet, die aus peroxidischen Initiatoren und Reduktionsmitteln wie Aminen, Polyaminen, Thioharnstoff, Eisen-II-salzen usw. bestehen. Als Initiatoren kommen auch wasserunlösliche Initiatoren, wie Azoisobutyronitril und Benzoylperoxid, in Betracht. Letztere sind dann praktisch nur in der organischen Phase gelöst. Die genannten Initiatoren werden in Mengen von 0,1 bis 5 Gew.-%, bevorzugt 0,3 bis 3,0 Gew.-%, bezogen auf das Monomergemisch, hinzugegeben.

Zur Regelung der Molekulargewichte der Polymeren können noch übliche Regler eingesetzt werden, z. B. n-Dodecylmercaptan, Diisopropylxanthogendisulfid, Thioglykol und Thioglycerin. Sie werden in Mengen von 0,1 bis 2 Gew.-%, bezogen auf die Monomermischung, zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden. Besonders bevorzugt sind das kontinuierliche und das Zulaufverfahren. Bei letzterem wird unter Stickstoffatmosphäre Wasser zusammen mit einem Teil oder dem gesamtem Emulgatorsystem und gegebenenfalls einem Teil des Monomergemischs vorgelegt, auf die Polymerisationstemperatur von 20 bis 150 °C, vorzugsweise 50 bis 100 °C erhitzt und das Monomergemisch sowie der Initiator und gegebenenfalls Emulgator innerhalb von 0,5 bis 10 Stunden, bevorzugt 1 bis 6 Stunden, zugetropft.

Nach einiger Zeit wird nachaktiviert und die Reaktion bis zu einem Umsatz von ca. 99,0 % bis 99,9 Gew.-% vervollständigt. Das Gewichtsverhältnis Emulgator zu Polymer beträgt hierbei 1 : 9 bis 7 : 3, vorzugsweise 1 : 4 bis 1 : 1. Restmonomere sowie eventuell noch vorhandenes organisches Lösungsmittel werden im Anschluß an die Emulsionscopolymerisation im Vakuum destillativ entfernt. Danach wird soviel Wasser zugesetzt, bis eine ca. 10 bis 30 gew.-%ige wäßrige kolloiddisperse Lösung resultiert. Die Viskosität dieser Dispersionen, gemessen in einem Rotationsviskosimeter bei 20 °C, liegt im allgemeinen unterhalb von 50 mPa.s. Die mittels Laser-Streulicht-Spektroskopie gemessenen mittleren Teilchendurchmesser liegen je nach Reaktionsbedingungen zwischen 15 und 200 µm, vorzugsweise zwischen 20 und 150 µm. Dispersionen mit Teilchengrößen unter 50 µm erscheinen transparent, während solche mit größeren Teilchen trüber erscheinen. Auch die Stabilität der Dispersionen mit Teilchengrößen unter 100 µm ist besser als die mit Teilchengrößen über 100 µm, was z. B. durch thermische Belastung bei Temperaturen über 50 °C gezeigt werden kann. Bei grobteiligeren Dispersionen ist meist der Anteil an Sedimenten erheblich höher als bei feinteiligen.

Führt man hingegen Emulsionspolymerisationen gemäß der DE-OS 2 814 527 mit kationischen Dispergatoren aus, bei denen der Gehalt an basischen Comonomeren bei höchstens 20 Gew.-% liegt, so resultieren relativ instabile, grobteilige Dispersionen mit mittleren Teilchengrößen zwischen 200 und 300 µm.

Die Stabilität der erfindungsgemäßen kolloiddispersen Leimungsmittel wird auch durch Pfropfanteile des Polymeren auf den in relativ großen Mengen vorhandenen polymeren Emulgator erhöht. Solche Pfropfreaktionen die durch Übertragungsreaktionen durch den Emulgator ausgelöst werden, sind in der Literatur bekannt (vgl. H. Gerrens, Fortschritte der Hochpolymer-Forschung, Band I, (1959) Seite 300).

Die erfindungsgemäßen Leimungsmittel für Papier sind nach allen bei der Papierherstellung für die Oberflächen- und Masseleimung gebräuchlichen Arbeitsmethoden einsetzbar.

Die Vorteile gegenüber Leimungsmitteln gemäß DE-OS 1 621 688, einer relativ instabilen Mischung eines kationischen Latex mit einem Polykation auf der Basis Styrol und Maleinsäureanhydrid, sind die weitgehende pH-Unabhängigkeit der Leimungswirkung, die geringe Neigung zu Abscheidungen in Form von Sedimenten und die geringe Schaumneigung. Die sehr stabilen transparenten bzw. nur wenig trüben kolloiddispersen Lösungen der erfindungsgemäßen kationischen Leimungsmittel für Papier sind im Gegensatz zu den instabilen Dispersionen gemäß DE-OS 1 621 688 problemlos zu verarbeiten. Sie garantieren absolute Homogenität des geleimten Papiers und zeigen auf praktisch allen Papieren gute bis hervorragende Leimungswirkung, wobei insbesondere die Leimung von aluminiumsulfatfreiem Papier hervorzuheben ist. Hierbei ist besonders die hervorragende Leimung von kreidehaltigem Papier zu erwähnen.

## Beispiel 1

### Herstellung der kationischen Emulgatoren

In einem 40 l Rührautoklaven werden 5 720 g Isopropanol vorgelegt. Der Autoklav wird gründlich mit Stickstoff gespült und danach auf 80 °C hochgeheizt. Bei dieser Temperatur werden die Mischungen I und die Lösungen II der Tabelle I innerhalb von ca. 4 Stunden unter Luftausschluß zudosiert. Dann wird 1 bis 2 Stunden nachgerührt, danach mit III nachaktiviert. Daraufhin wird ca. 6 bis 12 Stunden bei 80 °C gerührt.

Nach der Terpolymerisation wird auf 40 °C bzw. auf 50 °C abgekühlt und die in Tabelle I angegebenen Mengen an Quaternierungsmitteln (IV) zudosiert. Es wird 1 bis 5 Stunden bei 40 bzw. 50 °C nachgerührt und danach mit den ebenfalls in Tabelle I angegebenen Mengen an Essigsäure versetzt. In

einem 120 l Vorratsgefäß, das mit einem Rührer versehen ist, werden ca. 63-65 l entionisiertes Wasser von einer Temperatur von ca. 60 °C vorgelegt und der Inhalt des 40 l Autoklaven hiermit vereinigt.

Die Herstellung einer homogenen wäßrigen Lösung erfolgt bei intensivem Rühren in kurzer Zeit. Die wäßrigen Lösungen, die noch organisches Lösungsmittel enthalten, besitzen die ebenfalls in Tabelle I verzeichneten Eigenschaften.

Tabelle I

| Emulgator | A | B | C | D |
|---|---|---|---|---|
| Polymerisationstemperatur (°C) | 80 | 80 | 80 | 80 |
| Temperatur bei der Umsetzung mit Epichlorhydrin (°C) | 40 | 40 | 50 | 50 |
| I. N,N-Dimethylaminoethyl-methacrylat (g) | 3217 | 2257 | 3217 | 3217 |
| Styrol (g) | 10224 | 10608 | 10224 | 10224 |
| Acrylnitril (g) | 2644 | 3219 | 2644 | 2644 |
| II. Azoisobutyronitril (g) | 530 | 600 | 590 | 590 |
| Aceton (g) | 3000 | 3000 | 3000 | 3000 |
| III. Azoisobutyronitril (g) | 75 | 75 | 71 | 71 |
| Aceton (g) | 300 | 300 | 300 | 300 |
| IV. Epichlorhydrin (g) | 1896 | 1330 | - | - |
| Chloressigsäureethylester (g) | - | - | 1887 | - |
| p-Toluolsulfonsäuremethyl-ester (g) | - | - | - | 1235 |
| V. Essigsäure (g) | 2630 | 2630 | 2370 | 2370 |
| Konzentration (Gew.-%) | 20,5 | 20,3 | 20,7 | 20,1 |
| Viskosität (bei 20°C) (mPa·s) +) | 50-70 | 880-1200 | - | - |
| pH-Wert | 3,9 | 3,8 | 3,0 | 2,9 |
| Umsatz bezogen auf die Monomermischung (gew.-%) | 99,8 | 99,7 | 99,5 | 99,6 |
| Aussehen der Emulgatorlösung | klar | klar | klar | klar |

+) Die Viskosität ist keine Konstante, da Strukturviskosität vorliegt.

Beispiele 2 bis 4

In einem 2 l Vierhalskolben mit Rührer, Rückflußkühler, Gaseinlaß und -auslaß werden 350 g entionisiertes Wasser vorgelegt. Danach wird unter Stickstoffatmosphäre gründlich ausgekocht und auf 70 °C abgekühlt. Danach werden die Emulsionen I (vgl. Tabelle 2) zur Vorlage hinzugegeben und anschließend Stickstoff übergeleitet. Danach wird 0,5 g einer 35 %igen Wasserstoffperoxidlösung zugegeben. Nach ca. 15-30 Minuten werden die Mischungen II und 6 g einer 35 %igen Wasserstoffperoxidlösung, die mit 100 g entionisiertem Wasser verdünnt ist, gleichzeitig in 2 bis 3 Stunden zudosiert. Danach wird noch 2 bis 5 Stunden nachgerührt, anschließend wird mit 1 bis 2 g Wasserstoffperoxidlösung (35 %) nachaktiviert und noch ca. 2 bis 10 Stunden nachpolymerisiert. Danach werden im Wasserstrahlvakuum ca. 50 bis 150 ml eines Gemisches aus Wasser, organischem Lösungsmittel (Isopropanol und Aceton) und Restmonomeren abdestilliert und durch 50 bis 150 ml entionisiertes Wasser ersetzt. Die physikalisch-chemischen Eigenschaften der so erhaltenen kolloiddispersen Lösungen sind ebenfalls in Tabelle II verzeichnet.

(Siehe Tabelle II Seite 6 f.)

Tabelle II

| Beispiel | 2 | 3 | 4 |
|---|---|---|---|
| I. Emulgator A (vgl. Tab. I) (g) | 500 | 500 | 500 |
| Acrylnitril (g) | 3,0 | 5,0 | 7,0 |
| Acrylsäure-n-butylester (g) | 7,0 | 5,0 | 3,0 |
| II. Acrylnitril (g) | 57,0 | 95,0 | 133,0 |
| Acrylsäure-n-butylester (g) | 133,0 | 95,0 | 57,0 |
| Konzentration (Gew.-%) | 26,4 | 26,6 | 26,7 |
| Viskosität (bei 20°C) (mPa·s) | < 50 | < 50 | < 50 |
| pH-Wert | 4,1 | 4,1 | 4,2 |
| Umsatz bezogen auf das Monomergemisch vor der Destillation (Gew.-%) | ~99,8 | ~99,6 | ~99,7 |
| Aussehen der kolloiddispersen Lösung | transparent | transparent | transparent |
| Mittlerer Teilchendurchmesser $d_z$ (µm) | 30 ± 3 | 32 ± 2 | 29 ± 2 |

Beispiele 5 und 6

Die kolloiddispersen Leimungsmittel 5 und 6 werden wie die entsprechenden Leimungsmittel 3 und 4 hergestellt, wobei allerdings der Emulgator A gegen den Emulgator B (vgl. Tabelle I) ausgetauscht wird. Wie man in Tabelle III sieht, sind die physikalisch-chemischen Eigenschaften der kolloiddispersen Lösungen denen der Beispiele 2-4 äquivalent.

Tabelle III

| Beispiel | 5 | 6 |
|---|---|---|
| I. Emulgator B (vgl. Tabelle 1) (g) | 500 | 500 |
| Acrylnitril (g) | 5,0 | 7,0 |
| Acrylsäure-n-butylester (g) | 5,0 | 3,0 |
| II. Acrylnitril (g) | 95,0 | 133,0 |
| Acrylsäure-n-butylester (g) | 95,0 | 57,0 |
| Konzentration (Gew.-%) | 25,2 | 25,6 |
| Viskosität (bei 20°C) (mPa·s) | < 50 | < 50 |
| pH-Wert | 4,0 | 4,0 |
| Umsatz bezogen auf das Monomergemisch vor der Destillation (Gew.-%) | ~ 99,7 | ~ 99,8 |
| Aussehen der kolloiddispersen Lösung | transparent | transparent |

Beispiele 7 bis 9

Die kolloiddispersen Leimungsmittel 7-9 werden wie die Leimungsmittel 2-4 hergestellt, wobei Emulgator A beibehalten, aber Acrylsäure-n-butylester durch Acrylsäure-2-ethylhexylester ausgetauscht wird. In Tabelle IV sind die Zusammensetzungen der Monomermischungen und die physikalisch-chemischen Eigenschaften der kolloidalen Leimungsmittel aufgelistet.

(Siehe Tabelle IV Seite 7 f.)

Tabelle IV

| Beispiel | 7 | 8 | 9 |
|---|---|---|---|
| I. Emulgator A (vgl. Tabelle I) (g) | 500 | 500 | 500 |
| Acrylnitril (g) | 7,0 | 5,0 | 3,0 |
| Acrylsäure-2-ethylhexylester (g) | 3,0 | 5,0 | 7,0 |
| II. Acrylnitril (g) | 133,0 | 95,0 | 57,0 |
| Acrylsäure-2-ethylhexylester (g) | 57,0 | 95,0 | 133,0 |
| Konzentration (Gew.-%) | 24,6 | 25,2 | 25,7 |
| Viskosität (bei 20°C) (mPa·s) | <50 | <50 | <50 |
| pH-Wert | 4,1 | 4,0 | 4,0 |
| Umsatz bezogen auf das Monomergemisch vor der Destillation (Gew.-%) | ~99,6 | ~99,7 | ~99,6 |
| Aussehen der kolloiddispersen Lösung | transparent | nahezu transparent sehr wenig trüb | etwas trüb |
| mittlerer Teilchendurchmesser $d_z$ (μm) | 25±2 | 35±3 | 38±3 |

Beispiele 10 und 11

Die kolloiddispersen Leimungsmittel 10 und 11 werden wie die Leimungsmittel 2-4 hergestellt, wobei jedoch Emulgator A durch die Emulgatoren C und D (vgl. Tabelle I) in den in Tabelle V angegebenen Mengen ersetzt werden. In der Tabelle 5 sind neben den Monomermischungen noch die physikalisch-chemischen Eigenschaften der Papierleimungsmittel aufgelistet.

Tabelle V

| Beispiel | 10 | 11 |
|---|---|---|
| I. Emulgator C (g) | 500 | - |
| Emulgator D (g) | - | 500 |
| Acrylnitril (g) | 5,0 | 5,0 |
| Acrylsäure-n-butylester (g) | 5,0 | 5,0 |
| II. Acrylnitril (g) | 95,0 | 95,0 |
| Acrylsäure-n-butylester (g) | 95,0 | 95,0 |
| Konzentration (Gew.-%) | 25,9 | 25,5 |
| Viskosität (bei 20°C) (mPa·s) | <50 | <50 |
| pH-Wert | 3,3 | 3,5 |
| Aussehen der kolloiddispersen Lösung | wenig trüb | wenig trüb |

Beispiele 12 und 13 (mit Hilfsemulgatoren)

In einem 2 l Vierhalskolben mit Rückflußkühler, Rührer, Gaseinlaß und -auslaß werden 400 g entionisiertes Wasser vorgelegt und gründlich unter Stickstoffatmosphäre ausgekocht. Danach wird auf 70 °C abgekühlt und Mischung I (vgl. Tabelle VI) zudosiert. Nach gründlichem Durchspülen mit Stickstoff wird 0,5 g einer 35 gew.-%igen Wasserstoffperoxidlösung zugegeben. Nach weiteren 15 Minuten werden die Mischungen II und III in 2 Stunden gleichmäßig zudosiert. Bei 70 °C wird anschließend 3 Stunden gerührt, dann mit 1 g Wasserstoffperoxidlösung (35 %ig) versetzt und 3 Stunden nachgerührt. Anschließend werden im Wasserstrahlvakuum 50 ml Lösungsmittel sowie Restmonomere abdestilliert und durch

50 ml entionisiertes Wasser ersetzt. Die physikalisch-chemischen Daten der Leimungsmittel sind in Tabelle VI aufgelistet.

Tabelle VI

| Beispiel | 12 | 13 |
|---|---|---|
| I. Emulgator A (g) | 500 | 500 |
| Hilfsemulgator E+) (g) | 10 | - |
| Hilfsemulgator F++) (g) | - | 10 |
| Acrylnitril (g) | 5,0 | 5,0 |
| Acrylsäure-n-butylester (g) | 5,0 | 5,0 |
| II. Acrylnitril (g) | 95 | 95 |
| Acrylsäure-n-butylester (g) | 95 | 95 |
| III. Wasserstoffperoxid (35 %ig) (g) | 6,0 | 6,0 |
| entionisiertes Wasser (g) | 100 | 100 |
| Konzentration (Gew.-%) | 26,0 | 25,0 |
| Viskosität (bei 20°C) (mPa s) | <20 | <20 |
| pH-Wert | 4,4 | 4,0 |
| Aussehen der kolloiddispersen Lösung | nahezu transparent | nahezu transparent |
| mittlerer Teilchendurchmesser (μm) | 42 | 45 |

Erläuterung zu Tabelle VI

+) Hilfsemulgator E: Umsetzungsprodukt von Benzylphenylphenol mit einem Hydroxylgruppen enthaltenden Polyether aus Ethylenoxid.

++) Hilfsemulgator F: Umsetzungsprodukt von Abietinsäure mit einem Hydroxylgruppen enthaltenden Polyether aus Ehylenoxid.

Beispiel 14 (Vergleichsbeispiel)

Herstellung der Emulgatoren G und H gemäß DE-OS 2 814 527

In einem mit Stickstoff gespülten 1 l Vierhalskolben mit Rührer, Rückflußkühler sowie Gaseinlaß und -auslaß wird 50 g Isopropanol vorgelegt. Es wird Stickstoff übergeleitet und auf 80 °C erhitzt. Danach werden die Mischungen I (vgl. Tabelle VII) in ca. 3 Stunden zudosiert. Dann wird eine Stunde nachgerührt und mit II nachaktiviert. Daraufhin wird 6 Stunden bei 80 °C nachgerührt und danach III hinzugegeben. Ist die wäßrige Lösung homogen, wird bei 80 °C IV zudosiert und 3 Stunden nachgerührt. Die Konzentrationen der Emulgatorlösungen sind in Tabelle VII angegeben.

Herstellung der Emulsionspräparate

In einem mit Stickstoff gespülten 2 l Vierhalskolben mit Rührer, Rückflußkühler sowie Gaseinlaß und -auslaß werden 400 g ausgekochtes entionisiertes Wasser vorgelegt, auf eine Temperatur von 70 °C eingestellt und danach V und VI zugegeben (vgl. Tabelle VIIa). Nach einer Keimbildungsphase von 15 Minuten werden die Mischungen VII und VIII gleichzeitig in 2 Stunden zudosiert. Bei 70 °C wird nachgerührt, dann mit IX nachaktiviert und bis zu Umsätzen über 99 % auspolymerisiert. Restmonomere sowie organisches Lösungsmittel werden im Wasserstrahlvakuum destillativ entfernt und durch salzfreies Wasser ersetzt. Die physikalisch-chemischen Eigenschaften der erhaltenen Emulsionspolymerisate sind ebenfalls in Tabelle VIIa aufgelistet.

(Siehe Tabelle VII Seite 9 f.)

Tabelle VII

| Emulgator | G | H |
|---|---|---|
| I. N,N-Dimethylaminoethylmethacrylat (g) | 32,9 | 22,4 |
| Styrol (g) | 107,1 | 117,6 |
| Azoisobutyronitril (g) | 5,0 | 5,0 |
| II. Azoisobutyronitril (g) | 0,5 | 0,5 |
| III. Essigsäure (g) | 12,6 | 8,6 |
| entionisiertes Wasser (g) | 650 | 650 |
| IV. Epichlorhydrin (g) | 19,4 | 13,2 |
| Konzentration (Gew.-%) | 20,2 | 19,3 |

Tabelle VIIa

| Vergleichsbeispiel | | |
|---|---|---|
| V. Emulgatorlösung G (g) | 500 | - |
| Emulgatorlösung H (g) | - | 500 |
| Acrylnitril (g) | 5,0 | 5,0 |
| Acrylsäure-n-butylester (g) | 5,0 | 5,0 |
| VI. Wasserstoffperoxidlösung (35 %ig) (g) | 0,5 | 0,5 |
| VII. Acrylnitril (g) | 95,0 | 95,0 |
| Acrylsäure-n-butylester (g) | 95,0 | 95,0 |
| VIII. Wasserstoffperoxidlösung (35 %) (g) | 6,0 | 6,0 |
| entionisiertes Wasser (g) | 100 | 100 |
| IX. Wasserstoffperoxidlösung (35 %) (g) | 1,0 | 1,0 |
| Konzentration (Gew.-%) | 24,2 | 25,2 |
| Viskosität (bei 20°C) (mPa·s) | <50 | <50 |
| pH-Wert | 4,4 | 4,4 |
| Aussehen | sehr trüb | sehr trüb |
| mittlerer Teilchendurchmesser (μm) | 260 | 264 |

An Hand der Vergleichsbeispiels wird gezeigt, daß die Emulgatoren gemäß der DE-OS 2 814 527 für die Emulsionscopolymerisation von Acrylnitril und Acrylsäure-n-butylester nur schlecht geeignet sind. Das resultiert aus der Tatsache, daß der Emulgator selbst aufgrund seiner chemischen Inhomogenität eine wäßrige Teildispersion darstellt, bei der ein Teil des Polymeren gelöst, der andere hingegen in kolloiddisperser Form vorliegt.

Das Vergleichsbeispiel liefert daher trübe Emulsionen mit Teilchengrößen von 260 bzw. 264 nm. Nach kurzer Zeit setzen sich am Behälterboden Agglomerate ab, die die Papierleimung und den Papierherstellungsprozeß empfindlich stören können. Auch die Leimung des Papieres selbst ist bei diesen grobdispersen Systemen verschlechtert.

Als Leimungsflotte für die Oberflächenleimung wird eine Lösung von 5 Gew.-% Stärke (Perfectamyl[R] A4692 der Firma ABEBE) und 0,20 bzw. 0,24 Gew.-% des zu prüfenden Leimungsmittels (berechnet als Wirksubstanz) in 94,80 bzw. 94,76 Gew.-% Wasser verwendet.

Für die Leimung wird eine Laborleimpresse der Firma Werner Mathis, Zürich, Type HF eingesetzt. Die Leimungsflotte hat in der Leimpresse eine Temperatur von ca. 20 °C. Das Papier wird mit einer Geschwindigkeit von 4 m/Minute durchgezogen.

Die Trocknung der oberflächengeleimten Papiere erfolgt auf einem Trockenzylinder innerhalb von ca. 45 sec. bei ca. 100 °C. Vor der Leimungsprüfung werden die Papiere 2 Stunden bei Raumtemperatur klimatisiert. Abschnitte der Papiere werden dann vorgewogen, 1 Minute lang in Wasser von 20 °C getaucht, zwischen Filterpapier mittels eines 10 kg Rollgewichts einmal abgepreßt und zurückgewogen.

## Anwendungsbeispiel 1

Dieses Beispiel zeigt die gute Wirksamkeit einiger Leimungsmittel auf aluminiumsulfatfreiem Papier.

Das verwendete Rohpapier hat folgende Zusammensetzung und Eigenschaften : 50 Gew.-% Nadelholzzellstoff, 50 Gew.-%. Laubholzzellstoff ; 9,5 Gew.-% Clay-Asche, pH-Wert im Stoffauflauf : 7,5 ; Naßaufnahme in der Laborleimpresse : ca. 80 Gew.-%, Papiergewicht : 80 g/m$^2$.

### Tabelle VIII

Oberflächenleimung auf aluminiumsulfatfreiem Papier

| Leimungsmittel aus Beispiel: | Wasseraufnahme in g/m² bei Zusatz von 0,20 Gew.-% | 0,24 Gew.-% Leimungsmittel (bezogen auf reine Wirksubstanz) zur Flotte: |
|---|---|---|
| 3 | 33,2 | 32,4 |
| 5 | 34,1 | 33,1 |
| 7 | 33,2 | |
| 8 | 31,8 | |
| 9 | 32,6 | |
| 10 | 34,5 | 33,7 |
| 13 | 32,0 | 31,5 |

Ohne Leimungsmittel beträgt die Wasseraufnahme 89,0 g/m$^2$.

## Anwendungsbeispiel 2

Dieses Beispiel zeigt die gute Wirksamkeit einiger Leimungsmittel auf holzschliffhaltigem Papier.

Die Zusammensetzung und Eigenschaften dieses Papiers waren die folgenden :

40 Gew.-% Nadelholzzellstoff, 60 Gew.-% Holzschliff ; 14,1 Gew.-% Clay-Asche ; 2 Gew.-% Aluminiumsulfat ; pH-Wert im Stoffauflauf : 4,5 ; Naßaufnahme : ca. 60 Gew.-% : Papiergewicht : ca. 80 g/cm$^2$.

### Tabelle IX

Oberflächenleimung auf holzschliffhaltigem Papier

| Leimungsmittel aus Beispiel: | Wasseraufnahme in g/m² bei Zusatz von 0,20 Gew.-% | 0,24 Gew.-% Leimungsmittel (bezogen auf reine Wirksubstanz) zur Flotte: |
|---|---|---|
| 3 | 31,8 | 28,4 |
| 5 | 30,5 | 27,5 |
| 7 | 31,3 | |
| 8 | 27,8 | |
| 9 | 27,7 | |
| 10 | 31,9 | 29,7 |
| 13 | 27,7 | 27,4 |

Ohne Leimungsmittel beträgt die Wasseraufnahme : 93,5 g/m$^2$.

### Anwendungsbeispiel 3

Dieses Beispiel demonstriert den guten Effekt der beschriebenen Leimungsmittel auf calciumcarbonathaltigem Papier.

Zusammensetzung und Eigenschaften dieses Papiers : 50 Gew.-% Nadelholzzellstoff, 50 Gew.-% Laufholzzellstoff ; 7,9 Gew.-% Kreide-Asche, pH-Wert im Stoffauflauf : 7,5 ; Naßaufnahme : ca. 80 Gew.-% ; Papiergewicht : 75 g/m$^2$.

Tabelle X

Oberflächenleimung auf calciumcarbonathaltigem Papier

| Leimungsmittel aus Beispiel: | Wasseraufnahme in g/m$^2$ bei Zusatz von 0,20 Gew.-% Leimungsmittel (bezogen auf reine Wirksubstanz) zur Flotte: | 0,24 Gew.-% |
|---|---|---|
| 3 | 37,1 | 33,8 |
| 5 | 36,5 | 33,4 |
| 7 | 36,2 | |
| 8 | 36,7 | |
| 9 | 36,9 | |
| 10 | 37,5 | 35,4 |
| 13 | 34,5 | 34,0 |

Ohne Leimungsmittel beträgt die Wasseraufnahme 78,7 g/m$^2$.

### Anwendungsbeispiel 4 (Vergleichsbeispiel)

In diesem Beispiel werden die Leimungsmittel aus den Beispielen 3, 5 und 8 im Hinblick auf ihre pHunabhängige Leimungswirkung mit einem kationischen Leimungsmittel gemäß DE-OS 1 621 688 (Leimungsmittel K) verglichen.

Hierzu wird das in Anwendungsbeispiel 1 beschriebene Rohpapier verwendet. Dazu wird wiederum die beidseitige Wasseraufnahme sowohl beim sich von selbst einstellenden pH-Wert (pH 5,9-6,2) als auch bei einem pH-Wert von 8,0 in der Flotte gemessen. Der Leimungsgrad wird bei Zusatz von 0,20 Gew.-% Wirksubstanz zur Flotte gemessen (bei K 0,25 Gew.-%).

Tabelle XI

Oberflächenleimung in Abhängigkeit vom pH-Wert der Flotte im Vergleich zu Leimungsmittel K.

| Leimungsmittel: | Wasseraufnahme in g/m$^2$ bei pH 5,9-6,2 | pH 8,0 |
|---|---|---|
| K | 32,1 | 56,0 |
| Beispiel 3 | 33,2 | 33,0 |
| Beispiel 5 | 34,1 | 33,5 |
| Beispiel 8 | 31,8 | 30,9 |

Es zeigt sich hierbei ganz deutlich, daß der Leimungseffekt der erfindungsgemäßen Leimungsmittel auch bei einem pH-Wert von 8,0 voll erhalten bleibt, während das Leimungsmittel nach dem Stand der Technik nur noch geringe Leimungswirkung zeigt.

### Anwendungsbeispiel 5

Dieses Beispiel zeigt die Verwendbarkeit der beschriebenen Leimungsmittel in der Papiermasse.

In einem Papierstoff aus 50 Gew.-% gebleichtem Birkensulfat-, 50 Gew.-% gebleichtem Kiefernsulfatzellstoff und 25 % Kreideeintrag (Mahlgrad 35° SR) werden bei einer Stoffdichte von 0,5 Gew.-% und

einem pH-Wert von 7,2 unter Rühren 0,25 bis 0,60 Gew.-% Leimungsmittel (Wirksubstanz bezogen auf trockenen Zellstoff) zugesetzt.

Sofort anschließend werden auf einem Laborblattbildner Papierblätter gebildet, die bei 100 °C getrocknet werden und ein Flächengewicht von ca. 80 g/m$^2$ haben.

Die Leimungswirkung wird durch die beidseitige Wasseraufnahme und die Dauer bis zum Tintendurchschlag bestimmt (Prüftinte gemäß DIN 53 126).

Zum Vergleich wird wiederum das kationische « Leimungsmittel K » herangezogen (vgl. Anwendungsbeispiel 4).

Tabelle XII

Vergleich des Leimungsmittels aus Beispiel 3 mit Leimungsmittel K beim Einsatz in der Papiermasse

Leimungsmittel : Wasseraufnahme (WA) in g/m$^2$ und Tintendurchschlag (TD) in min. bei Zusatz von 0,25 0,30 0,35 0,50 0,60 Gew.-% Leimungsmittel (bezogen auf Wirksubstanz) zur Papiermasse

| | | 0,25 | 0,30 | 0,35 | 0,50 | 0,60 |
|---|---|---|---|---|---|---|
| K | WA | | | 77 | 58 | 45 |
| | TD | | | 1 | 5 | 10 |
| 2 | WA | 73 | 55 | 41,6 | | |
| | TD | 10 | 16 | 23 | | |

Ohne Leimungsmittel beträgt die Wasseraufnahme 90,5 g/m$^2$.

**Ansprüche**

1. Kationische Leimungsmittel für Papier in Form einer wäßrigen kolloiddispersen Lösung mit mittleren Teilchendruchmessern von 15 bis 200 μm, dadurch erhältlich, daß man im wäßrigen Medium eine wasserlösliche kationische, chemisch einheitlich aufgebaute Terpolymerverbindung aus

a) 7-40 Gew.-% N,N-Dimethylaminoethylacrylat und/oder -methacrylat,
b) 45-80 Gew.-% Styrol und
c) 4-40 Gew.-% Acrylnitril

auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-%, bezogen auf das folgende Monomergemisch, dieses Emulgators mit dem Gemisch aus

d) Acrylnitril bzw. Methacrylnitril in Mengen von 5 bis 95 Gew.-% mit
e) Acrylsäure- und/oder Methacrylsäure-$C_1$-$C_{12}$-alkylestern in Mengen von 5-95 Gew.-%,

wobei die Summe der Komponenten d) und e) 100 Gew.-% beträgt, emulgiert und die so erhaltene Emulsion einer radikalisch initiierten Emulsionspolymerisation bei Temperaturen von 20 bis 150 °C unterwirft.

2. Leimungsmittel für Papier gemäß Anspruch 1, dadurch gekennzeichnet, daß die kationische, chemisch einheitlich aufgebaute Terpolymerverbindung aus

a) 8-20 Gew.-% N,N-Dimethylaminoethylacrylat und/oder -methacrylat,
b) 45-80 Gew.-% Styrol und
c) 5-35 Gew.-% Acrylnitril

wobei die Summe der Komponenten a)-c) stets 100 Gew.-% beträgt, und das Monomergemisch aus d) Acrylnitril bzw. Methacrylnitril in Mengen von 10 bis 90 Gew.-% und e) Acrylsäureestern und/oder Methacrylsäureestern in Mengen von 10 bis 90 Gew.-% besteht, wobei die Summe der Komponenten d) und e) 100 Gew.-% beträgt.

3. Leimungsmittel für Papier gemäß Anspruch 1, dadurch gekennzeichnet, daß man neben dem polymeren kationischen Emulgator gemäß Anspruch 1 einen kationischen und/oder nichtionogenen Hilfsemulgator in Mengen von 1 bis 40 Gew.-% bezogen auf den vorstehenden kationischen Emulgator einsetzt, wobei der nichtionogene Emulgator die Formel

$$R_1—X—(CH_2—CH_2—O)_n—H$$

besitzt, worin

X O, NH oder COO bedeutet,
$R_1$ ein höherer aliphatischer, cycloaliphatischer, araliphatischer oder aromatischer Kohlenwasserstoffrest mit 6-30 C-Atomen ist, und
n eine ganze Zahl $\geq 2$ ist

und wobei der kationische Hilfsemulgator die Formel

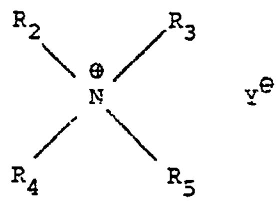

(III)

besitzt, wobei

$R_2$ und $R_3$ höhere aliphatische bzw. araliphatische Kohlenwasserstoffreste mit 6 bis 20 C-Atomen,
$R_4$ und $R_5$ niedere aliphatische Kohlenwasserstoffreste mit 1 bis 6 C-Atomen und
$Y^{\ominus}$ ein Halogenidion darstellen.

4. Leimungsmittel gemäß Anspruch 1, dadurch gekennzeichnet, daß das Gewichtsverhältnis zwischen polymerem kationischen Emulgator und Monomergemisch aus d) und e) 1 : 4 bis 1 : 1 beträgt.

5. Leimungsmittel gemäß Anspruch 1, dadurch gekennzeichnet, daß die Emulsionspolymerisation mit wasserlöslichen, Radikale liefernden nichtionogenen Peroxiden und/oder Azoverbindungen, gegebenenfalls als Redoxysystem, in Mengen von 0,1 bis 5 Gew.-% bezogen auf das Monomergemisch initiiert wird.

6. Leimungsmittel gemäß Anspruch 1, dadurch gekennzeichnet, daß die auspolymerisierten kolloiddispersen Lösungen mittlere Teilchendurchmesser zwischen 20 und 150 µm aufweisen.

7. Verfahren zur Herstellung von kationischen Leimungsmitteln in Form einer wäßrigen kolloiddispersen Lösung mit mittleren Teilchendurchmessern von 15 bis 200 µm, dadurch gekennzeichnet, daß man im wäßrigen Medium eine wasserlösliche kationische, chemisch einheitlich aufgebaute Terpolymerverbindung aus

a) 7-40 Gew.-% N,N-Dimethylaminoethylacrylat und/oder -methacrylat,
b) 45-80 Gew.-% Styrol und
c) 4-40 Gew.-% Acrylnitril

auflöst, wobei die Summe der Komponenten a) bis c) stets 100 Gew.-% beträgt und von den N,N-Dimethylaminogruppen des Terpolymeren mindestens 10 % quaterniert und die restlichen protoniert sind, und indem man in Gegenwart von 10 bis 70 Gew.-% bezogen auf das folgende Monomergemisch, dieses Emulgators mit dem Gemisch aus

d) Acrylnitril bzw. Methacrylnitril in Mengen von 5 bis 95 Gew.-% mit
e) Acrylsäure- und/oder Methacrylsäure-$C_1$-$C_{12}$-alkylestern in Mengen von 5-95 Gew.-%,

wobei die Summe aus d) und e) 100 Gew.-% beträgt, emulgiert und die so erhaltene Emulsion einer radikalisch initiierten Emulsionspolymerisation bei Temperaturen von 20 bis 150 °C unterwirft.

## Claims

1. Cationic sizing agents for paper in the form of an aqueous colloid-disperse solution having average particle diameters of from 15 to 200 µm, obtainable by dissolving a water-soluble cationic, chemically uniformly composed terpolymer compound of :

a) from 7 to 40 % by weight of N,N-dimethylaminoethyl acrylate and/or methacrylate,
b) from 45 to 80 % by weight of styrene, and
c) from 4 to 40 % by weight of acrylonitrile

in an aqueous medium, the total of components a) to c) always amounting to 100 % by weight and at least

10 % of the N,N-dimethylamino groups of the terpolymer being quaternised and the rest being protonated, and carrying out emulsification, in the presence of from 10 to 70 % by weight, based on the following monomer mixture, of this emulsifier, with a mixture of

d) acrylonitrile or methacrylonitrile, in quantities of from 5 to 95 % by weight, and
e) $C_1$-$C_{12}$-alkyl esters of acrylic acid and/or of methacrylic acid in quantities of from 5 to 95 % by weight,

the total of components d) and e) amounting to 100 % by weight, subjecting the emulsion thus obtained to a radically initiated emulsion polymerisation process at temperatures of from 20 to 150 °C.

2. Sizing agents for paper according to claim 1, characterised in that the cationic, chemically uniformly composed terpolymer compound consists of :

a) from 8 to 20 % by weight of N,N-dimethylaminoethyl acrylate and/or methacrylate,
b) from 45 to 80 % by weight of styrene, and
c) from 5 to 35 % by weight of acrylonitrile,

the total of components a) to c) always amounting to 100 % by weight, and the monomer mixture consists of d) acrylonitrile or methacrylonitrile in quantities of from 10 to 90 % by weight and e) acrylic acid esters and/or methacrylic acid esters in quantities of from 10 to 90 % by weight, the total of components d) and e) amounting to 100 % by weight.

3. Sizing agents for paper according to claim 1, characterised in that in addition to the polymeric cationic emulsifier according to claim 1, a cationic and/or non-ionic auxiliary emulsifier is used in quantities of from 1 to 40 % by weight, based on the above-mentioned cationic emulsifier, the non-ionic emulsifier having the formula

$$R_1—X—(CH_2—CH_2—O)_n—H$$

wherein

X represents O, NH or COO,
$R_1$ is a higher aliphatic, cycloaliphatic, araliphatic or aromatic hydrocarbon radical having from 6 to 30 carbon atoms, and
n is an integer $\geq 2$

and the cationic auxiliary emulsifier having the formula :

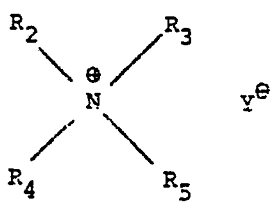

(III)

wherein

$R_2$ and $R_3$ represent higher aliphatic or araliphatic hydrocarbon radicals having from 6 to 20 carbon atoms,
$R_4$ and $R_5$ represent lower aliphatic hydrocarbon radicals having from 1 to 6 carbon atoms, and
$Y^{\ominus}$ represents a halide ion.

4. Sizing agents according to claim 1, characterised in that the weight ratio between the polymeric cationic emulsifier and the monomer mixture of d) and e) is from 1 : 4 to 1 : 1.

5. Sizing agents according to claim 1, characterised in that the emulsion polymerisation process is initiated using water-soluble, radical-producing non-ionic peroxides and/or azo compounds, optionally as a redox system, in quantities of from 0.1 to 5 % by weight, based on the monomer mixture.

6. Sizing agents according to claim 1, characterised in that the completely polymerised colloid-disperse solutions have average particle diameters of between 20 and 150 µm.

7. A process for the preparation of cationic sizing agents, in the form of an aqueous colloid-disperse solution having average particle diameters of from 15 to 200 µm, characterised in that a water-soluble cationic, chemically uniformly composed terpolymer compound of :

a) from 7 to 40 % by weight of N,N-dimethylaminoethyl acrylate and/or methacrylate,
b) from 45 to 80 % by weight of styrene, and
c) from 4 to 40 % by weight of acrylonitrile

is dissolved in an aqueous medium, the total of components a) to c) always amounting to 100 % by weight and at least 10 % of the N,N-dimethylamino groups of the terpolymer being quaternised and the rest being protonated, and emulsification is carried out, in the presence of from 10 to 70 % by weight, based on the following monomer mixture, of this emulsifier, with a mixture of

d) acrylonitrile or methacrylonitrile, in quantities of from 5 to 95 % by weight, and
e) $C_1$-$C_{12}$-alkyl esters of acrylic acid and/or of methacrylic acid in quantities of from 5 to 95 % by weight,

the total of d) and e) amounting to 100 % by weight, and the emulsion thus obtained is subjected to a radically initiated emulsion polymerisation process at temperatures of from 20 to 150 °C.

**Revendications**

1. Agents d'encollage cationiques pour le papier sous forme d'une solution aqueuse colloïdale ayant des diamètres moyens de particules de 15 à 200 μm, que l'on obtient en dissolvant dans le milieu aqueux un composé terpolymère cationique soluble dans l'eau de structure chimiquement uniforme, de

a) 7-40 % en poids d'acrylate et/ou méthacrylate de N,N-diméthylaminoéthyle,
b) 45-80 % en poids de styrène et
c) 4-40 % en poids d'acrylonitrile,

la somme des composants a) à c) étant toujours de 100 % en poids et au moins 10 % des groupes N,N-diméthylamino du terpolymère étant quaternisés et les groupes restants étant protonisés, et en émulsionnant en présence de 10 à 70 % en poids de cet émulsionnant, par rapport au mélange de monomères suivant, avec le mélange de

d) 5 à 95 % en poids d'acrylonitrile ou de méthacrylonitrile avec
e) 5 à 95 % en poids d'esters d'alkyles en $C_1$-$C_{12}$ d'acide acrylique et/ou d'acide méthacrylique,

la somme des composants d) et e) étant de 100 % en poids, et en soumettant l'émulsion ainsi obtenue à une polymérisation en émulsion induite par les radicaux à des températures de 20 à 150 °C.

2. Agents d'encollage pour le papier selon la revendication 1, caractérisés en ce que le composé terpolymère cationique de structure chimiquement uniforme consiste en

a) 8-20 % en poids d'acrylate et/ou méthacrylate de N,N-diméthylaminoéthyle,
b) 45-80 % en poids de styrène et
c) 5-35 % en poids d'acrylonitrile,

la somme des composants a) à c) étant toujours de 100 % en poids, et le mélange de monomères consistant en

d) 10 à 90 % en poids d'acrylonitrile ou de méthacrylonitrile et
e) 10 à 90 % en poids d'esters acryliques et/ou méthacryliques,

la somme des composants d) et e) étant de 100 % en poids.

3. Agents d'encollage pour le papier selon la revendication 1, caractérisés en ce que, outre l'émulsionnant cationique polymère selon la revendication 1, on utilise 1 à 40 % en poids d'un émulsionnant auxiliaire cationique et/ou non ionique, par rapport à l'émulsionnant cationique précédent, l'émulsionnant non ionique répondant à la formule

$$R_1—X—(CH_2—CH_2—O)_n—H$$

dans laquelle

X représente O, NH ou COO,
$R_1$ est un reste d'hydrocarbure aliphatique, cycloaliphatique, arylaliphatique ou aromatique supérieur en $C_6$-$C_{30}$ et
n est un nombre entier $\geq 2$

et l'émulsionnant auxiliaire cationique répondant à la formule

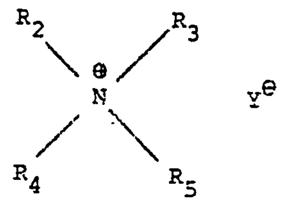 (III)

dans laquelle

$R_2$ et $R_3$ représentent des restes d'hydrocarbures aliphatiques ou arylaliphatiques supérieurs en $C_6$-$C_{20}$,

$R_4$ et $R_5$ représentent des restes d'hydrocarbures aliphatiques inférieurs en $C_1$-$C_6$ et

$Y^{\ominus}$ représente un ion halogénure.

4. Agents d'encollage selon la revendication 1, caractérisés en ce qu le rapport pondéral entre l'émulsionnant cationique polymère et le mélange de monomères de d) et e) est de 1 : 4 à 1 : 1.

5. Agents d'encollage selon la revendication 1, caractérisés en ce que la polymérisation en émulsion est amorcée avec des peroxydes non ioniques et/ou des composés azoïques solubles dans l'eau, libérant des radicaux, éventuellement sous forme de système redox en quantités de 0,1 à 5 % en poids par rapport au mélange de monomères.

6. Agents d'encollage selon la revendication 1, caractérisés en ce que les solutions colloïdales totalement polymérisées présentent des diamètres moyens de particules compris entre 20 et 150 µm.

7. Procédé pour la fabrication d'agents d'encollage cationiques sous forme d'une solution aqueuse colloïdale ayant des diamètres moyens de particules de 15 à 200 µm, caractérisé en ce que l'on dissout dans le milieu aqueux un composé terpolymère cationique soluble dans l'eau, de structure chimiquement uniforme, de

a) 7-40 % en poids d'acrylate et/ou méthacrylate de N,N-diméthylaminoéthyle,
b) 45-80 % en poids de styrène et
c) 4-40 % en poids d'acrylonitrile,

la somme des composants a) à c) étant toujours de 100 % en poids et 10 % au moins des restes N,N-diméthylamino du terpolymère étant quaternisés et les groupes restants étant protonisés, et on émulsionne en présence de 10 à 70 % en poids de cet émulsionnant, par rapport au mélange de monomères suivants, avec le mélange de

d) 5 à 95 % en poids d'acrylonitrile ou de méthacrylonitrile, avec
e) 5 à 95% en poids d'esters d'alkyles en $C_1$-$C_{12}$, d'acide acrylique et/ou d'acide méthacrylique

la somme de d) et e) étant de 100 % en poids, et on soumet l'émulsion ainsi obtenue à une polymérisation en émulsion amorcée par les radicaux à des températures de 20 à 150 °C.